(19) Europäisches Patentamt
European Patent Office
Office européen des brevets

(11) EP 4 582 387 A1

(12) EUROPEAN PATENT APPLICATION
published in accordance with Art. 153(4) EPC

(43) Date of publication:
**09.07.2025 Bulletin 2025/28**

(21) Application number: **23859855.1**

(22) Date of filing: **11.07.2023**

(51) International Patent Classification (IPC):
***C01G 49/00*** *(2006.01)* ***B01D 53/14*** *(2006.01)*
***B01J 20/06*** *(2006.01)* ***B01J 20/34*** *(2006.01)*

(52) Cooperative Patent Classification (CPC):
**B01D 53/14; B01J 20/06; B01J 20/34; C01G 49/00;**
Y02C 20/40

(86) International application number:
**PCT/JP2023/025512**

(87) International publication number:
**WO 2024/048085 (07.03.2024 Gazette 2024/10)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.08.2022 JP 2022136412**

(71) Applicant: **FUJIFILM Corporation**
**Tokyo 106-8620 (JP)**

(72) Inventor: **HASHIMOTO Hirokazu**
**Ashigarakami-gun, Kanagawa 258-8577 (JP)**

(74) Representative: **HGF**
**HGF Limited**
**1 City Walk**
**Leeds LS11 9DX (GB)**

# (54) CARBON DIOXIDE ABSORPTION MATERIAL, CARBON DIOXIDE ABSORPTION DEVICE, AND CARBON DIOXIDE ABSORPTION METHOD

(57) Provided are a carbon dioxide absorbent including potassium ferrite powder, a carbon dioxide absorbing device including the carbon dioxide absorbent, and a carbon dioxide absorbing method including bringing the carbon dioxide absorbent into contact with carbon dioxide-containing gas.



Processed by Luminess, 75001 PARIS (FR)

## Description

### Technical Field

The present invention relates to a carbon dioxide absorbent, a carbon dioxide absorbing device, and a carbon dioxide absorbing method.

### Background Art

Recently, efforts have been made globally to realize the decarbonized society. Under these circumstances, in order to recover carbon dioxide in exhaust gas exhausted from a power plant, a factory, and the like, research and development of a carbon dioxide absorbent has progressed (for example, PTL1). In addition, an investigation on a direct air capture (DAC) technique of directly recovering carbon dioxide from the atmosphere has also progressed.

### Citation List

### Patent Literature

PTL1: WO2021/117623A1

### Summary of Invention

### Technical Problem

PTL1 discloses that sodium ferrite absorbs carbon dioxide. In addition, PTL1 discloses that, after desorbing carbon dioxide from sodium ferrite by heating the sodium ferrite that absorbs carbon dioxide (that is, after initial use), this sodium ferrite is used again for absorbing carbon dioxide, that is, is reused as a carbon dioxide absorbent (the content of which refers to Examples of PTL1). However, according to the investigation by the present inventors, it was found that, in a case where the sodium ferrite is used as a carbon dioxide absorbent, an absorption rate of carbon dioxide during the initial use is slow and an absorb rate of carbon dioxide during the reuse is significantly decreased as compared to the absorption rate during the initial use.

### Solution to Problem

An object of one aspect of the present invention is to provide a carbon dioxide absorbent where an absorption rate of carbon dioxide during initial use is fast and a decrease in absorption rate during reuse is small.

As a result of thorough investigation, the present inventors newly found that potassium ferrite powder has carbon dioxide absorption ability, an absorption rate of carbon dioxide during initial use is fast, and a decrease in absorption rate during reuse is small.

That is, one aspect of the present invention is as follows.

[1] A carbon dioxide absorbent comprising potassium ferrite powder.
[2] The carbon dioxide absorbent according to [1], further comprising a resin.
[3] The carbon dioxide absorbent according to [2], which is in a pellet form.
[4] A carbon dioxide absorbing device comprising the carbon dioxide absorbent according to any one of [1] to [3].
[5] The carbon dioxide absorbing device according to [4], further comprising a heating unit that heats the carbon dioxide absorbent.
[6] A carbon dioxide absorbing method comprising bringing the carbon dioxide absorbent according to any one of [1] to [3] into contact with carbon dioxide-containing gas.
[7] The carbon dioxide absorbing method according to [6], further comprising:

desorbing at least a part of carbon dioxide absorbed by the carbon dioxide absorbent by heating the carbon dioxide absorbent that is in contact with the carbon dioxide-containing gas; and
bringing the heated carbon dioxide absorbent into contact with the carbon dioxide-containing gas.

### Effects of Invention

According to one aspect of the present invention, it is possible to provide a carbon dioxide absorbent where an absorption rate of carbon dioxide during initial use is fast and a decrease in absorption rate during reuse is small. In addition, according to another aspect of the present invention, it is possible to provide a carbon dioxide absorbing device including the carbon dioxide absorbent, and a carbon dioxide absorbing method using the carbon dioxide absorbent.

Brief description of the drawings

[Fig. 1] Fig. 1 shows, as a reference pattern, X-ray diffraction spectra obtained in Examples 1 and 2.
[Fig. 2] Fig. 2 is a graph showing carbon dioxide absorption rates during initial use in Examples 1 and 2 and Comparative Examples 1 and 2.
[Fig. 3] Fig. 3 is a graph showing carbon dioxide absorption rates during reuse in Examples 1 and 2 and Comparative Examples 1 and 2.
[Fig. 4] Fig. 4 is a graph showing carbon dioxide absorption rates during initial use and during reuse in Example 3.

Description of Embodiments

[Carbon Dioxide Absorbent]

One aspect of the present invention relates to a carbon dioxide absorbent comprising potassium ferrite powder. Hereinafter, the carbon dioxide absorbent will be described in more detail.

<Potassium Ferrite Powder>

The carbon dioxide absorbent includes potassium ferrite powder.

In the present invention and the present specification, the term "powder" refers to an aggregate of a plurality of particles. The term "aggregate" is not limited to a form in which particles forming an aggregate are in direct contact with each other, and also includes a form in which a resin described later or the like is interposed between the particles.

In the present invention and the present specification, "potassium ferrite powder" refers to powder in which an alkali metal atom having the highest content by % by atom among alkali metal atoms in the powder is potassium atom and a crystal structure of the potassium ferrite is detected as a main phase by X-ray diffraction analysis. The main phase refers to a structure to which a diffraction peak having the highest intensity in an X-ray diffraction spectrum obtained by X-ray diffraction analysis is attributed. For example, in a case where the diffraction peak having the highest intensity in the X-ray diffraction spectrum obtained by X-ray diffraction analysis is attributed to a crystal structure of potassium ferrite, it is determined that the crystal structure of potassium ferrite is detected as the main phase. In a case where only a single crystal structure is detected by X-ray diffraction analysis, this detected crystal structure is taken as the main phase. The potassium ferrite powder can be powder in which a crystal structure is a single phase in one form, or can be powder including a plurality of crystal structures in another form. The case where the "crystal phase is a single phase" refers to a case where only one kind of diffraction pattern showing a specific crystal structure is observed in X-ray diffraction analysis. On the other hand, in a case where a plurality of crystal structures are provided, two or more kinds of diffraction patterns showing a specific crystal structure are observed in X-ray diffraction analysis. The attribution of the diffraction pattern can be found in a database of the International Centre for Diffraction Data (ICDD, registered trade name), an inorganic crystal structure database (ICSD), and the like. The diffraction pattern of the potassium ferrite can be found in, for example, "ICSD collection code: 157785" of the inorganic crystal structure database (ICSD).

The potassium ferrite is one kind of an alkali ferrite. In a case where atoms forming a crystal structure are an alkali metal atom, an iron atom, and an oxygen atom, the alkali ferrite has a composition represented by a compositional formula: $AFeO_2$. In the compositional formula, "A" represents the alkali metal atom. In the potassium ferrite powder, an alkali metal atom having the highest content among alkali metal atoms by % by atom in the powder is a potassium atom, and the powder may include only a potassium atom as the alkali metal atom.

As a result of thorough investigation, the present inventors found that, for example, in a case where the potassium ferrite powder is compared to powder of sodium ferrite that is one kind of an alkali ferrite, an absorption rate of carbon dioxide during initial use is fast, and a decrease in absorption rate during reuse is small. Further, the potassium ferrite powder can exhibit carbon dioxide absorption ability at a temperature (for example, about 20°C to 30°C) of about room temperature. Therefore, it is clear that general-purpose properties are excellent.

In addition, according to an investigation by the present inventors, potassium carbonate that is one kind of a potassium salt has carbon dioxide absorption ability but has a high desorption temperature of 220°C to 230°C obtained using a method described in Examples below. On the other hand, the potassium ferrite powder has a lower desorption temperature than potassium carbonate. Therefore, it was found that, by heating the potassium ferrite powder at a temperature of 200°C or lower, the absorbed carbon dioxide can be desorbed, and the absorption rates of carbon dioxide during initial use and during reuse are faster than those of potassium carbonate.

The carbon dioxide absorbent includes the potassium ferrite powder, and thus can be a carbon dioxide absorbent where an absorption rate of carbon dioxide during initial use is fast and a decrease in absorption rate during reuse is small. In addition, the carbon dioxide absorbent can exhibit carbon dioxide absorption ability at a temperature of about room temperature. Further, by heating the carbon dioxide absorbent at a temperature of 200°C or lower, the absorbed carbon dioxide can be desorbed. The carbon dioxide absorbent can be used, for example, in a humidity environment where the relative humidity is about 40% to 50%. Note that the humidity environment is exemplary, and the carbon dioxide absorbent is not limited to being used in the humidity environment.

(Method of Manufacturing Potassium Ferrite Powder)

A method of manufacturing the potassium ferrite powder in the carbon dioxide absorbent is not particularly limited. The potassium ferrite powder in the carbon dioxide absorbent can be manufactured using any manufacturing method. Hereinafter, a solid phase method will be described as one example of the method of manufacturing the potassium ferrite powder. The solid phase method is a method of manufacturing powder of the potassium ferrite powder by calcining a mixture obtained by mixing a plurality of solid raw materials.

Examples of the solid raw material used in the solid phase method include one or more compounds of a potassium atom and one or more compounds of an iron atom. These compounds can be an oxide, a hydroxide, or the like. The compound of a potassium atom is preferably potassium hydroxide from the viewpoint that the temperature during calcination described below can be set to be a lower temperature than that in a case where another compound of a potassium atom is used. In a case where powder of potassium ferrite having a composition represented by a compositional formula: $KFeO_2$, a mixing ratio between the compound of a potassium atom and the compound of an iron atom can be a mixing ratio where a molar ratio between a K atom and an Fe atom is about 1:1. The mixing of the solid raw materials can be performed under any conditions using a well-known unit, such as a mortar and pestle or a pulverizer (a cutter mill, a ball mill, a beads mill, a roller mill, a jet mill, a hammer mill, an attritor, or the like) that can pulverize and mix the raw material mixture. In addition, the mixing of the solid raw materials is not limited to being performed under dry conditions. Under wet conditions, for example, a solvent such as water can be added to perform the mixing in a slurry state. The above-describe mixing can be performed, for example, in the atmosphere of room temperature (for example, about 20°C to 30°C).

After the mixing, the obtained raw material mixture can be calcined. In this calcination, the crystallization of the raw material mixture can be promoted, and thus the crystal structure of the potassium ferrite can be formed. Regarding calcination conditions, the calcining temperature can be set to be in a range of, for example, 400°C to 800°C. The calcining temperature can be, for example, an ambient temperature inside the device in which the calcination is performed (for example, an in-furnace temperature inside a heating furnace). The calcination time can be set to be in a range of 3 hours to 10 hours. Note that the above-described ranges are exemplary, and the calcination may be performed under conditions where the crystal structure of the potassium ferrite can be formed. The calcination can be performed, for example, in the atmosphere.

The calcined product after the calcination can be optionally subjected to a dry or wet pulverization step. The pulverization can be performed under any conditions using a well-known pulverizing unit such as a mortar and pestle or a pulverizer (a cutter mill, a ball mill, a beads mill, a roller mill, a jet mill, a hammer mill, an attritor, or the like).

The content of the potassium ferrite powder in the carbon dioxide absorbent with respect to 100% by mass that is the total mass of the carbon dioxide absorbent can be, for example, 50% by mass or more, 60% by mass or more, or 70% by mass or more, and may be 100% by mass, 100% by mass or less, less than 100% by mass, or 90% by mass or less.

<Resin>

The carbon dioxide absorbent can include only the potassium ferrite powder, and can also include one or more other components in addition to the potassium ferrite powder. Examples of the other components include a resin. The resin can function as a binder in the carbon dioxide absorbent. In the present invention and the present specification, "resin" includes a homopolymer and a copolymer. The resin can be a thermoplastic resin or a thermosetting resin, and examples of the resin include a polypropylene resin. In a case where the carbon dioxide absorbent includes the resin, the content of the resin with respect to 100% by mass that is the total mass of the carbon dioxide absorbent can be, for example, less than 50% by mass, 40% by mass or less, or 30% by mass or less, and can be, for example, 5% by mass or more, 10% by mass or more, or 20% by mass or more. In a case where the carbon dioxide absorbent includes the resin, only one resin may be used, or two or more resins may be included at any mixing ratio. In a case where two or more resins are included, the content of the resin is the total content of the two or more resins.

The carbon dioxide absorbent including the resin can be, for example, a pellet obtained by cutting a resin composition (that is, a kneaded material) in any shape, the resin composition being obtained by kneading the potassium ferrite powder and the resin. The pellet can be in any shape such as a granular shape, a flaky shape, or a columnar shape. The carbon dioxide absorbent in a pellet form can be obtained by cutting the kneaded material including the potassium ferrite powder and the resin in any shape using a commercially available pelletizer or a pelletizer having a well-known configuration.

[Carbon Dioxide Absorbing Device]

One aspect of the present invention relates to a carbon dioxide absorbing device comprising the carbon dioxide absorbent.

For example, the carbon dioxide absorbing device includes a carbon dioxide absorbing unit that accommodates the carbon dioxide absorbent. By allowing carbon dioxide-containing gas to pass through the carbon dioxide absorbing unit to bring the carbon dioxide-containing gas into contact with the carbon dioxide absorbent, a part or the entirety of carbon dioxide (that is, carbon dioxide gas) in the carbon dioxide-containing gas can be absorbed by the carbon dioxide absorbent. Next, by recovering the gas passed through the carbon dioxide absorbing unit, gas in which the carbon dioxide concentration is reduced to be less than that before the passage. The configuration of the carbon dioxide absorbing unit is not limited, and a well-known technique regarding the carbon dioxide absorbing device can be applied thereto.

In one form, the carbon dioxide absorbing device can comprise a heating unit that heats the carbon dioxide absorbing device. For example, by heating the carbon dioxide absorbent that is in contact with the carbon dioxide-containing gas, a part or the entirety of the carbon dioxide absorbed by the carbon dioxide absorbent can be desorbed. By bringing the carbon dioxide absorbent into contact with the carbon dioxide-containing gas after the desorption, carbon dioxide can be absorbed by the carbon dioxide absorbent. The configuration of the heating unit is not limited, and a well-known technique regarding the carbon dioxide absorbing device can be applied thereto. The heating unit can heat, for example, the carbon dioxide absorbent in the carbon dioxide absorbing unit at a temperature of 100°C or higher and 200°C or lower. The heating time is not particularly limited, and may be set to a time in which a part or the entirety of carbon dioxide absorbed by the carbon dioxide absorbent can be desorbed. The carbon dioxide desorbed from the carbon dioxide absorbent can be recovered using a well-known method such that, for example, the recovered carbon dioxide can be stored in the ground or is applicable to applications where carbon dioxide can be used.

[Carbon Dioxide Absorbing Method]

One aspect of the present invention relates to a carbon dioxide absorbing method comprising bringing the carbon dioxide absorbent into contact with carbon dioxide-containing gas.

The carbon dioxide absorbing method can further comprise: desorbing at least a part of carbon dioxide absorbed by the carbon dioxide absorbent by heating the carbon dioxide absorbent that is in contact with the carbon dioxide-containing gas; and bringing the heated carbon dioxide absorbent into contact with the carbon dioxide-containing gas.

For example, the carbon dioxide absorbing device can be used for performing the carbon dioxide absorbing method. The details of the carbon dioxide absorbing method can be found in the above description regarding the carbon dioxide absorbing device.

Regarding the carbon dioxide absorbing device and the carbon dioxide absorbing method, the carbon dioxide-containing gas can be, for example, exhaust gas exhausted from a power plant, a factory, and the like. The carbon dioxide absorbing device and the carbon dioxide absorbing method can be used for separating and recovering carbon dioxide from the exhaust gas. In addition, the carbon dioxide absorbing device and the carbon dioxide absorbing method can also be used in a DAC that directly recovers carbon dioxide from the atmosphere. That is, in one form, the carbon dioxide-containing gas can be the atmosphere.

Examples

Hereinafter, the present invention will be described based on Examples. Note that the present invention is not limited to the embodiments shown in Examples. Unless otherwise specified, steps and evaluations described below were performed in the atmosphere. In addition, the steps and the evaluations in the following description were performed at an ambient temperature of 23°C $\pm$ 1°C unless otherwise specified.

[Example 1]

Potassium hydroxide [KOH] and $\alpha$-iron oxide (III) [$\alpha$-$Fe_2O_3$] were weighed such that a molar ratio between a potassium atom and an iron atom was 1:1, were put into a pulverizer (WC-3, Wonder Crusher manufactured by OSAKA CHEMICAL Co., Ltd.), and were pulverized and mixed for 60 seconds in a state where a variable speed dial of the pulverizer was set to "3". As a result, powder of the raw material mixture (hereinafter, referred to as "mixed powder") was obtained.

Next, the obtained mixed powder was calcined for 8 hours in a heating furnace having an in-furnace temperature (hereinafter, referred to as "calcining temperature") of 400°C, and was pulverized and mixed for 60 seconds using a pulverizer (WC-3, Wonder Crusher manufactured by OSAKA CHEMICAL Co., Ltd.) in a state where a variable speed dial of the pulverizer was set to "3". As a result, potassium ferrite powder was obtained.

The potassium ferrite powder obtained as described above were subjected to various evaluations described below as the carbon dioxide absorbent according to Example 1.

[Example 2]

Potassium ferrite powder was obtained using the method described in Example 1, except that the calcining temperature was changed to 600°C.

The potassium ferrite powder obtained as described above were subjected to various evaluations described below as the carbon dioxide absorbent according to Example 2.

[Comparative Example 1]

Sodium hydroxide [NaOH] and α-iron oxide (III) [$\alpha$-$Fe_2O_3$] were weighed such that a molar ratio between a sodium atom and an iron atom was 1:1, were put into a pulverizer (WC-3, Wonder Crusher manufactured by OSAKA CHEMICAL Co., Ltd.), and were pulverized and mixed for 60 seconds in a state where a variable speed dial of the pulverizer was set to "3". As a result, mixed powder was obtained.

Next, the obtained mixed powder was calcined for 8 hours at a calcining temperature of 600°C, and was pulverized and mixed for 60 seconds using a pulverizer (WC-3, Wonder Crusher manufactured by OSAKA CHEMICAL Co., Ltd.) in a state where a variable speed dial of the pulverizer was set to "3". As a result, sodium ferrite powder was obtained.

The sodium ferrite powder obtained as described above were subjected to various evaluations described below as the carbon dioxide absorbent according to Comparative Example 1.

[Comparative Example 2]

Commercially available potassium carbonate powder (Wako 1st Grade potassium carbonate, manufactured by FUJIFILM Wako Pure Chemical Corporation) were subjected to various evaluations described below as the carbon dioxide absorbent according to Comparative Example 2.

[Example 3]

The potassium ferrite powder obtained using the method described in Example 1 and a polypropylene resin (MA3H, manufactured by Japan Polypropylene Corporation) were kneaded using a twin screw kneader (the content of the potassium ferrite powder: 70% by mass, the content of the polypropylene resin: 30% by mass), and a pellet was obtained using a pelletizer.

The pellet obtained as described above was subjected to various evaluations described below as the carbon dioxide absorbent according to Example 3.

[Evaluation Method]

<Verification of Crystal Structure>

Regarding each of the carbon dioxide absorbents (powders) according to Examples 1 and 2 and Comparative Example 1, a crystal structure was verified by X-ray diffraction analysis (XRD: X-ray diffraction). As a measurement device, X'Pert Pro manufactured by PANalytical Ltd. as a powder X-ray diffractometer was used. Measurement conditions are shown below.

-Measurement Conditions-

X-ray source: CuKα ray
[Wavelength: 1.54 Å (0.154 nm), output: 40 mA, 45 kV]

Scan range:

$$20° < 2\theta < 70°$$

Scan interval: 0.05°
Scan speed: 0.33 °/min

From the results of the X-ray diffraction analysis, it was verified that each of the carbon dioxide absorbents (powders) according to Examples 1 and 2 was potassium ferrite powder and the carbon dioxide absorbent (powder) according to Comparative Example 1 was sodium ferrite powder. In addition, it was verified that the crystal structure of each of the carbon dioxide absorbents according to Examples 1 and 2 and Comparative Example 1 was a single phase. Fig. 1 shows, as a reference pattern, X-ray diffraction spectra obtained in Examples 1 and 2. The reference pattern shown in Fig. 1 is a line pattern described in "ICSD collection code: 157785" of the inorganic crystal structure database (ICSD).

<Performance Evaluation of Carbon Dioxide Absorbent>

(1) Measurement of Carbon Dioxide Absorption Rate during Initial Use

A carbon dioxide concentration meter (GCH-2018, manufactured by MOTHERTOOL Co., Ltd.) and the carbon dioxide absorbent (5 g for each of the powders according to Examples 1 to 3 and Comparative Examples 1 and 2, 8 g for the pellet according to Example 3) were accommodated in a 1.5 L desiccator, and the carbon dioxide concentration in the desiccator was adjusted to about 5000 ppm (parts per million) by volume. A state where the carbon dioxide concentration in the desiccator decreased over time was observed for 2 hours. At this time, the temperature and humidity in the desiccator were 25°C and a relative humidity of 50%.
Regarding Examples 1 and 2, Table 2 and Fig. 2 show a change over time (that is, the absorption rate; hereinafter, the same applies) in the carbon dioxide concentration in the desiccator until 30 minutes (min) was elapsed from the start of the observation.
Regarding Comparative Examples 1 and 2, Table 2 and Fig. 2 show a change over time in the carbon dioxide concentration in the desiccator until 60 minutes was elapsed from the start of the observation.
Regarding Example 3, Table 4 and Fig. 4 show a change over time in the carbon dioxide concentration in the desiccator until 60 minutes was elapsed.

(2) Measurement of Desorption Temperature

After the observation of (1) for 2 hours, the desiccator was filled with carbon dioxide and was left to stand for 12 hours such that the carbon dioxide was saturated and absorbed by each of the carbon dioxide absorbents.
A part of the carbon dioxide absorbent that saturated and absorbed the carbon dioxide was collected, a peak temperature of weight loss was measured using a TG (Thermogravimeter)/DTA (Differential Thermal Analyzer), and the peak temperature was obtained as the desorption temperature of the carbon dioxide. Table 1 shows the desorption temperature obtained for each of the carbon dioxide absorbents. By heating each of the carbon dioxide absorbents to the vicinity of the desorption temperature obtained using the above-described method, the absorbed carbon dioxide can be desorbed from the carbon dioxide absorbent.

(3) Measurement of Carbon Dioxide Absorption Rate during Reuse

A part of the carbon dioxide absorbent that saturated and absorbed the carbon dioxide in (2) above was collected, and was heated for 3 hours in an oven having an internal temperature of 150°C.
Regarding the heated carbon dioxide absorbent, the carbon dioxide absorption rate was measured using the method described above in (1).
Regarding Examples 1 and 2, Table 3 and Fig. 3 show a change over time in the carbon dioxide concentration in the desiccator until 30 minutes was elapsed from the start of the observation.
Regarding Comparative Examples 1 and 2, Table 3 and Fig. 3 show a change over time in the carbon dioxide concentration in the desiccator until 60 minutes was elapsed from the start of the observation.
The carbon dioxide absorbent (potassium carbonate powder) according to Comparative Example 2 did not have carbon dioxide absorption ability during reuse as shown in Table 3 and Fig. 3. The reason for this is presumed to be that, since the desorption temperature was 220°C and was significantly higher than the heating temperature (150°C) in the oven as shown in Table 1, the saturated and absorbed carbon dioxide was not desorbed by the heating in the oven.
Regarding Example 3, Table 4 and Fig. 4 show a change over time in the carbon dioxide concentration in the desiccator until 60 minutes was elapsed.

[Table 1]

| Table 1: Desorption Temperature | | | | | |
|---|---|---|---|---|---|
| | Example 1 | Example 2 | Comparative Example 1 | Comparative Example 2 | Example 3 |
| Desorption Temperature (°C) | 156 | 160 | 120 | 220 | 156 |

[Table 2]

| Table 2: Absorption Rate during Initial Use | | | | |
|---|---|---|---|---|
| Time [min] | Example 1 | Example 2 | Comparative Example 1 | Comparative Example 2 |
| 0 | 5055 | 5024 | 5114 | 5219 |
| 1 | 3850 | 3844 | 4500 | 5000 |
| 3 | 2655 | 2711 | 3366 | 4651 |
| 5 | 1599 | 1401 | 2555 | 4057 |
| 10 | 514 | 612 | 1525 | 3140 |
| 20 | 81 | 71 | 489 | 2140 |
| 30 | 8 | 5 | 215 | 1458 |
| 60 | | | 18 | 607 |

[Table 3]

| Table 3: Absorption Rate during Reuse | | | | |
|---|---|---|---|---|
| Time [min] | Example 1 | Example 2 | Comparative Example 1 | Comparative Example 2 |
| 0 | 5066 | 5003 | 5222 | 5174 |
| 1 | 3799 | 3711 | 5006 | 5174 |
| 3 | 2554 | 2806 | 4711 | 5174 |
| 5 | 1506 | 1334 | 4011 | 5176 |
| 10 | 501 | 509 | 3099 | 5177 |
| 20 | 83 | 60 | 2201 | 5123 |
| 30 | 5 | 3 | 1511 | 5122 |
| 60 | | | 599 | 5127 |

[Table 4]

| Table 4: Absorption Rate during Initial Use and Absorption Rate during Reuse in Example 3 | | |
|---|---|---|
| Time [min] | Example 3_During Initial Use | Example 3_During Reuse |
| 0 | 5222 | 5155 |
| 1 | 5006 | 4988 |
| 3 | 4711 | 4809 |
| 5 | 4011 | 3988 |
| 10 | 3099 | 3047 |
| 20 | 2201 | 2111 |
| 30 | 1511 | 1478 |

(continued)

| Table 4: Absorption Rate during Initial Use and Absorption Rate during Reuse in Example 3 | | |
|---|---|---|
| Time [min] | Example 3_During Initial Use | Example 3_During Reuse |
| 60 | 599 | 567 |

As shown in Table 1, in the carbon dioxide absorbents according to Examples 1 to 3, the desorption temperature was lower than that of the carbon dioxide absorbent (potassium carbonate) according to Comparative Example 2.

It can be verified from the results shown in Table 2 and Fig. 2 that, in the carbon dioxide absorbents according to Examples 1 and 2, the carbon dioxide absorption rate during initial use was faster than that of the carbon dioxide absorbents according to Comparative Examples 1 and 2. Further, it can be verified from the results shown in Table 3 and Fig. 3 that, in the carbon dioxide absorbents according to Examples 1 and 2, the carbon dioxide absorption rate during reuse was about the same as that during the initial use. On the other hand, as shown in Table 3 and Fig. 3, in the carbon dioxide absorbent (sodium ferrite powder) according to Comparative Example 1, the carbon dioxide absorption rate during reuse was significantly decreased as compared to that during initial use.

It can be seen from the results shown in Table 4 and Fig. 4 that, even in a case where the potassium ferrite powder was mixed with the resin to be used as a pellet, the carbon dioxide absorption rate during initial use was fast, and the carbon dioxide absorption rate during the initial use was about the same as that during reuse.

Industrial Applicability

One aspect of the present invention is useful in various technical fields in which a reduction in the amount of carbon dioxide exhausted is desired.

## Claims

1. A carbon dioxide absorbent comprising potassium ferrite powder.

2. The carbon dioxide absorbent according to claim 1, further comprising a resin.

3. The carbon dioxide absorbent according to claim 2, which is in a pellet form.

4. A carbon dioxide absorbing device comprising the carbon dioxide absorbent according to any one of claims 1 to 3.

5. The carbon dioxide absorbing device according to claim 4, further comprising a heating unit that heats the carbon dioxide absorbent.

6. A carbon dioxide absorbing method comprising bringing the carbon dioxide absorbent according to any one of claims 1 to 3 into contact with carbon dioxide-containing gas.

7. The carbon dioxide absorbing method according to claim 6, further comprising:

    desorbing at least a part of carbon dioxide absorbed by the carbon dioxide absorbent by heating the carbon dioxide absorbent that is in contact with the carbon dioxide-containing gas; and
    bringing the heated carbon dioxide absorbent into contact with the carbon dioxide-containing gas.

FIG. 1

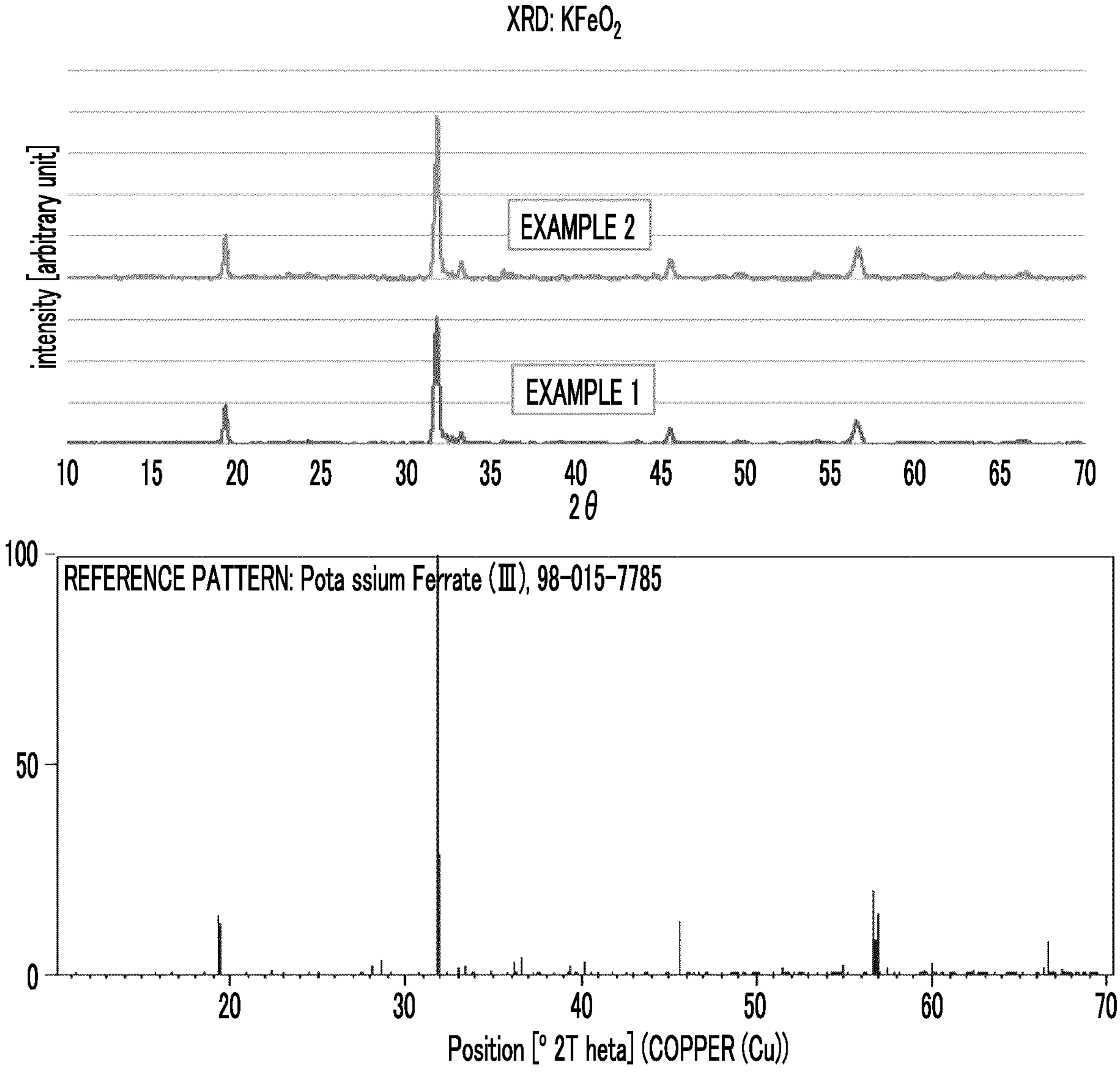
XRD: KFeO2
intensity [arbitrary unit]
EXAMPLE 2
EXAMPLE 1
10
15
20
25
30
35
40
45
50
55
60
65
70
2θ
100
50
0
REFERENCE PATTERN: Pota ssium Ferrate (III), 98-015-7785
Position [° 2T heta] (COPPER (Cu))

FIG. 2

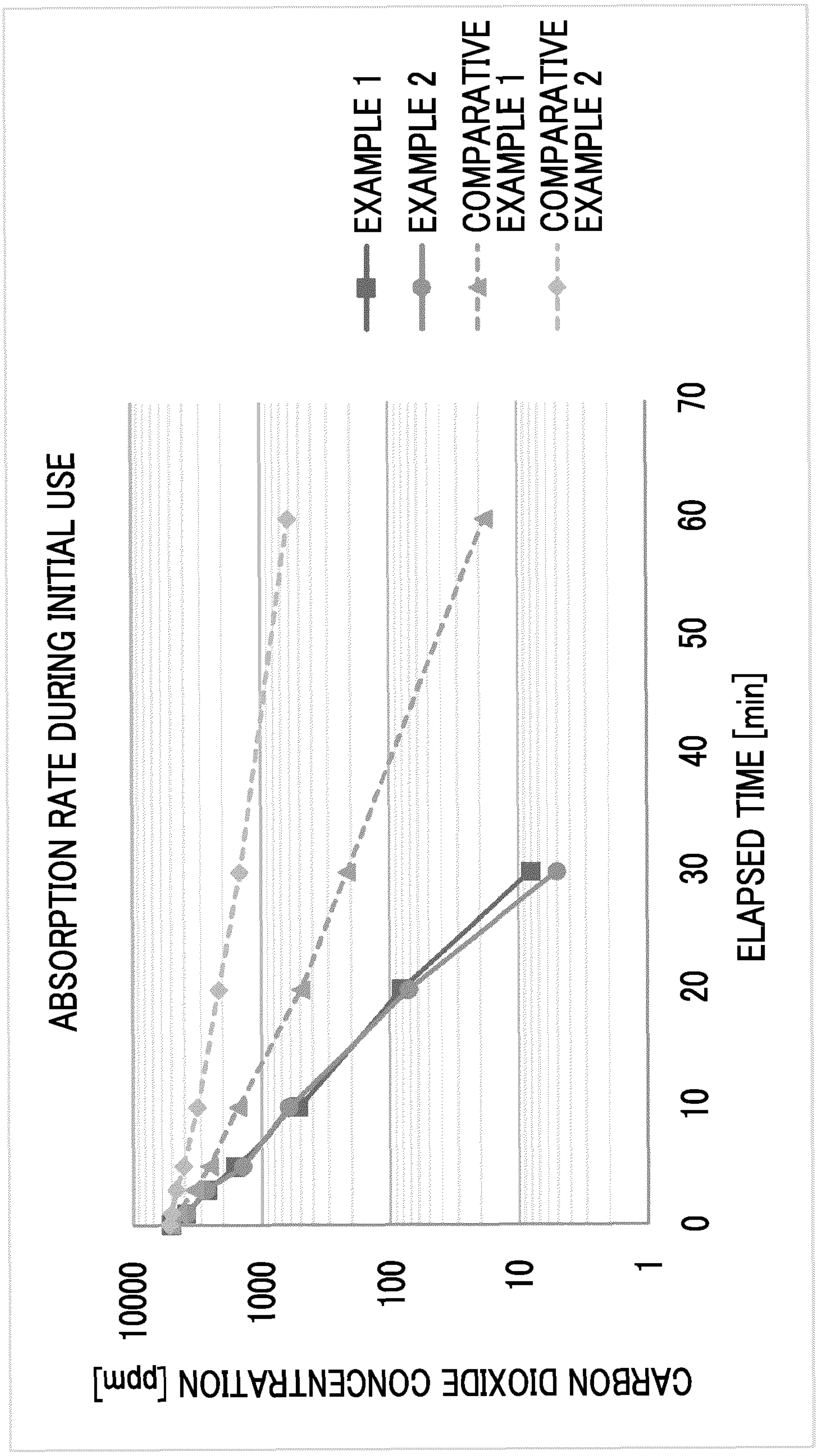
ABSORPTION RATE DURING INITIAL USE
CARBON DIOXIDE CONCENTRATION [ppm]
10000
1000
100
10
1
0
10
20
30
40
50
60
70
ELAPSED TIME [min]
EXAMPLE 1
EXAMPLE 2
COMPARATIVE EXAMPLE 1
COMPARATIVE EXAMPLE 2

FIG. 3

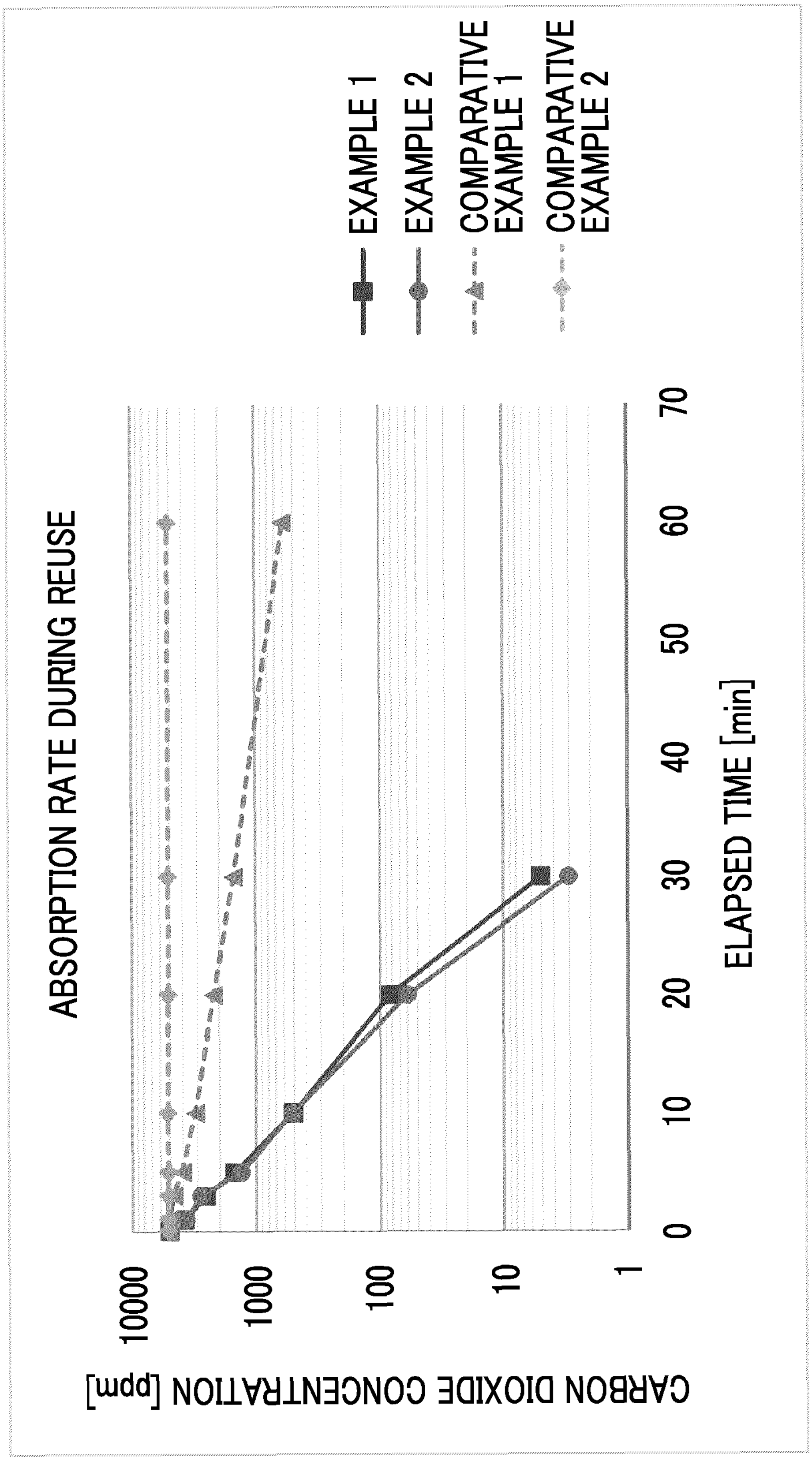
ABSORPTION RATE DURING REUSE
CARBON DIOXIDE CONCENTRATION [ppm]
10000
1000
100
10
1
0
10
20
30
40
50
60
70
ELAPSED TIME [min]
EXAMPLE 1
EXAMPLE 2
COMPARATIVE EXAMPLE 1
COMPARATIVE EXAMPLE 2

FIG. 4

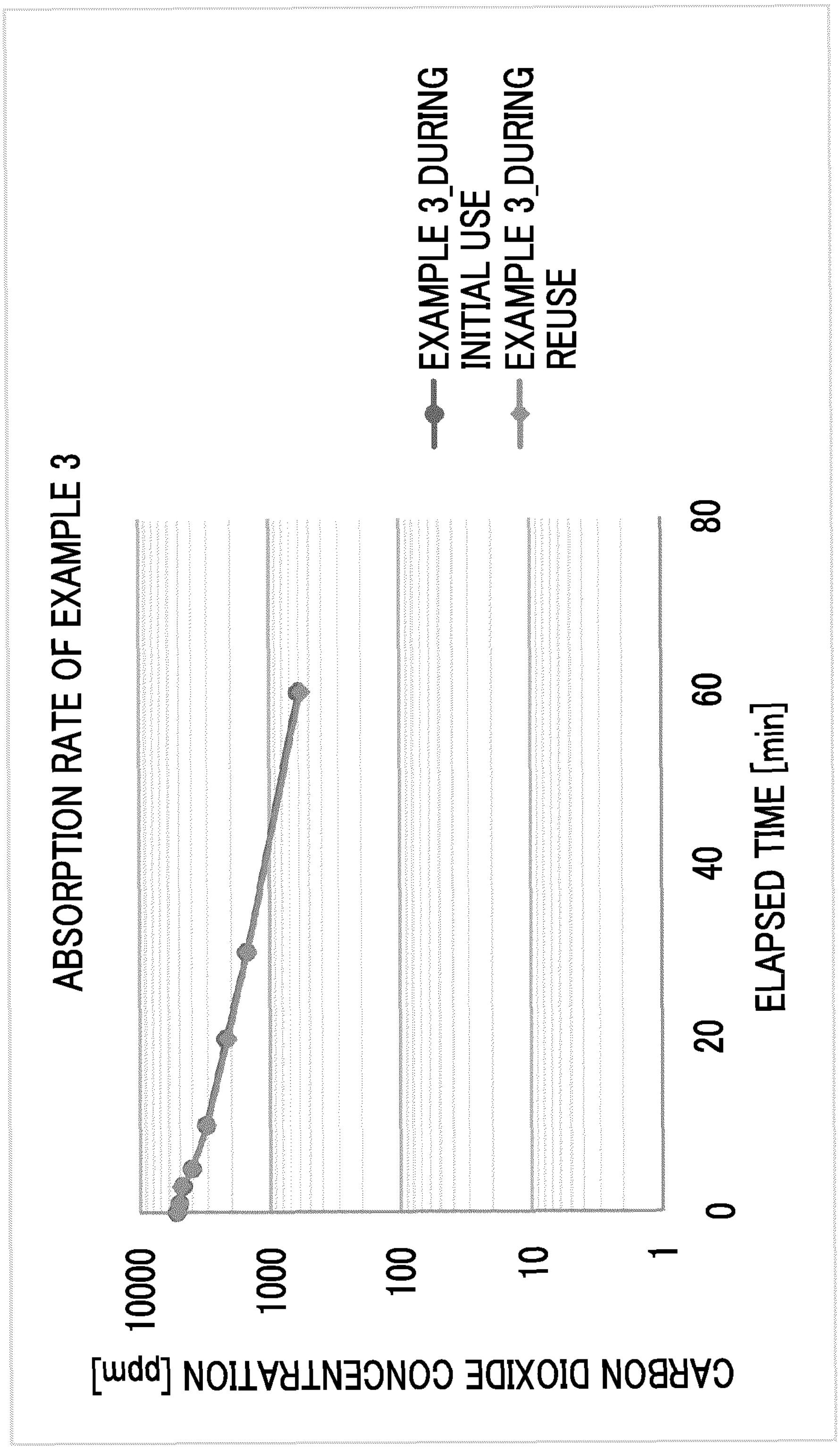
ABSORPTION RATE OF EXAMPLE 3
CARBON DIOXIDE CONCENTRATION [ppm]
10000
1000
100
10
1
0
20
40
60
80
ELAPSED TIME [min]
EXAMPLE 3_DURING INITIAL USE
EXAMPLE 3_DURING REUSE

**INTERNATIONAL SEARCH REPORT**

International application No.
**PCT/JP2023/025512**

**A. CLASSIFICATION OF SUBJECT MATTER**

***C01G 49/00***(2006.01)i; ***B01D 53/14***(2006.01)i; ***B01J 20/06***(2006.01)i; ***B01J 20/34***(2006.01)i
FI: B01J20/06 C; B01J20/34 H; B01D53/14 100; C01G49/00 A

According to International Patent Classification (IPC) or to both national classification and IPC

**B. FIELDS SEARCHED**

Minimum documentation searched (classification system followed by classification symbols)

C01G49/00; B01D53/14; B01J20/06; B01J20/34

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | US 2013/0266504 A1 (DAVIS, Mark E. XU, Bingjun. BHAWE, Yashodhan) 10 October 2013 (2013-10-10) fig. 2, paragraphs [0014], [0074]-[0100] | 1, 4-7 |
| Y | | 2-3 |
| Y | JP 2017-109198 A (SHARP KK) 22 June 2017 (2017-06-22) paragraphs [0068]-[0076] | 2-3 |
| A | WO 2021/117623 A1 (TODA KOGYO CORP) 17 June 2021 (2021-06-17) | 1-7 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 September 2023** | **26 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (January 2015)

**INTERNATIONAL SEARCH REPORT**
**Information on patent family members**

International application No.
**PCT/JP2023/025512**

| Patent document cited in search report | Publication date (day/month/year) | Patent family member(s) | Publication date (day/month/year) |
|---|---|---|---|
| US 2013/0266504 A1 | 10 October 2013 | WO 2013/151973 A1 | |
| JP 2017-109198 A | 22 June 2017 | (Family: none) | |
| WO 2021/117623 A1 | 17 June 2021 | US 2023/0029005 A1<br>EP 4074657 A1<br>CN 114787087 A<br>KR 10-2022-0112802 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2021117623 A1